# EUROPEAN PATENT SPECIFICATION

(11) **EP 0 522 162 B1**
(45) Date of publication and mention of the grant of the patent: **04.12.1996**
(21) Application number: 91906529.2
(22) Date of filing: 28.03.1991
(51) Int. Cl.: B29D 30/08

(54) **TIRE BUILDING APPARATUS**
VORRICHTUNG ZUR REIFENHERSTELLUNG
APPAREIL A FABRIQUER DES PNEUS

(30) Priority: 29.03.1990 JP 83381/90
(43) Date of publication of application: 13.01.1993
(73) Proprietor: Sumitomo Rubber Industries Ltd., Kobe-shi, Hyogo-ken (JP)
(72) Inventor: SOEDA, Koji, 9-6, Motoyamakitamachi 5-chome, Kobe-shi Hyogo 658 (JP); NOJIRI, Yasushi, 8-146, Nakazato-cho 1-chome, Kobe-shi Hyogo 651-11 (JP); OKUDA, Takaaki, 21-114, Oaza Shiraigakeshita, Fukushima 961 (JP)
(74) Representative: Stewart, Charles Geoffrey
(86) International application number: JP9100411
(87) International publication number: WO9114568

(56) References cited:
- DE-A- 1 942 579
- DE-B- 1 276 910
- GB-A- 2 092 100
- JP-A-57 174 236
- JP-A-58 028 363
- JP-A-59 120 438
- JP-A-63 256 429
- US-A- 4 128 450
- US-A- 4 468 275
- US-A- 4 798 647

## Description

### TECHNICAL FIELD

The present invention relates to a tyre building apparatus.

### BACKGROUND ART

Generally the building of motorcycle tyres, automobile tyres and other tyres is carried out at each factory with individual special building apparatuses different from each other depending on their individual building method, tyre type and the like.

Accordingly, for example in the case where motorcycle tyres are built at a factory at which automobile tyres previously have been built, or in the case of a changeover from low grade tyre building to high grade tyre building, the whole machine must be changed. Thus, it takes a long time for the change and consequently the cost therefor is great.

In view of these problems, an object of the present invention is to provide a tyre building apparatus which can accommodate a changeover required on occasion in each factory, of building method or tyre category without the need for a whole exchange of apparatus.

### DISCLOSURE OF THE INVENTION

In order to achieve the above-mentioned object, a tyre building apparatus of the present invention comprises a plurality of fixed components and a plurality of exchangeable components selectively attached to said plurality of fixed components, said plurality of exchangeable components including a former, a belt drum, a bead setter, a transferring member, stitchers, and servicers, said plurality of fixed components including gear boxes, a main shaft for said belt drum, a support base for said transferring member, a support base and a transfer mechanism for said stitchers, a main shaft for said former, a shaft for a ply down finger, and a lower base for supporting each of said plurality of fixed and exchangeable components.

In a tyre building apparatus of the present invention, a suite of various kinds of exchangeable members different in structure are gathered as exchangeable members which can be selectively attached to a group of common fixed members for tyre building and are modularised. Accordingly it is possible to provide a necessary tyre building apparatus quickly and economically in response to the needs for building, building method, switchover of kinds of tyre and the like at each factory.

### BRIEF DESCRIPTION OF THE DRAWINGS

Figure 1 is a schematic plan view showing an embodiment of the present invention; and
Figure 2 is a front view showing an embodiment.

### BEST MODE FOR CARRYING OUT THE INVENTION

Hereinafter, the present invention is explained in details with reference to the drawings showing an embodiment.

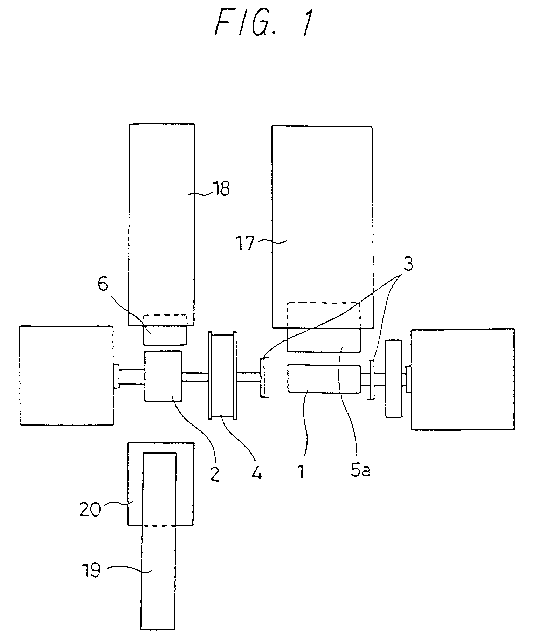

Figure 1 shows a tyre building apparatus of the present invention. This apparatus comprises a tyre building former 1, a belt drum 2, a bead setter 3, a transfer ring 4, a stitcher 5a for the former 1, a stitched 6 for the belt drum 2 etc. A cylindrical tyre carcass is formed on the former 1, a bead with an apex is attached to each side of the tyre carcass, and both edges of the carcass are rolled up around their respective bead. On the other hand, a belt-tread assembly is built on the belt drum 2, which assembly is then transferred to the former 1 by the transfer ring 4. The tyre carcass to which the beads are attached is toroidally shaped to a shape near to that of its final product, and is assembled to the belt-tread assembly to complete the green tyre building.

The apparatus of the present invention comprises a group of common fixed members for tyre building and various exchangeable members such as the former 1, the belt drum 2, the transfer ring 4, the stitcher 5a and the like. The necessary many exchangeable members are made as a suite of said members, each of them being different in structure and detail according to their individual purposes. Depending on the individual building process to be carried out a set of exchangeable members is selected from the suite and each is attached to the common fixed members. Thus so-called modularisation is realised.

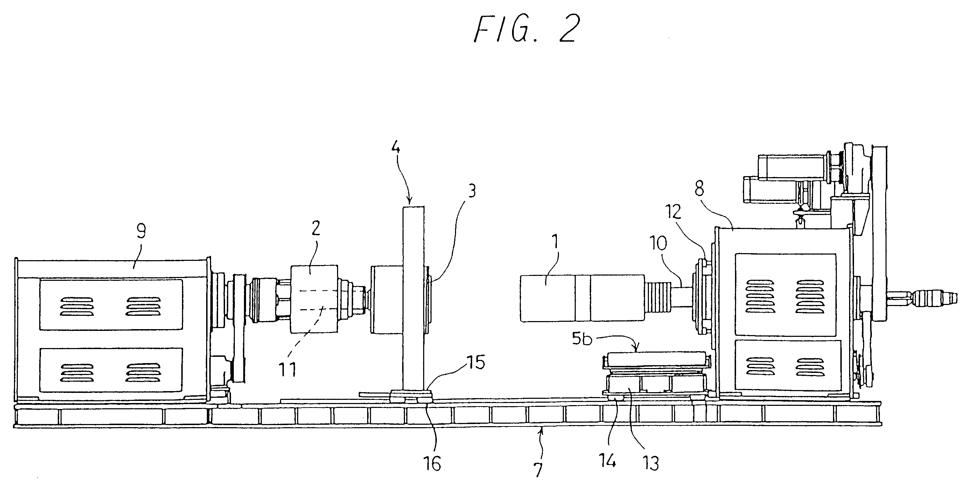

The group of common fixed members specifically includes, as shown in Figures 2, for example a lower base 7 for the whole apparatus, gear boxes 8 and 9 (each including a drive therein) attached to the base 7, a main shaft 10 for the former 1, a main shaft 11 for the belt drum 2, a bead setter 3, a shaft 12 for a ply turn down finger, a lower base 13 for the stitcher 5b, a transfer mechanism 14 for the base 13, a lower base 15 for the transfer ring 4, a transfer mechanism 16 for the base 15, and the like.

Thus for the former 1, a main body of the former can be selected, as the exchangeable member, from all the formers 1 available in the suite, each of them being different in structure, function, effect and the like for individual purposes. The selected main body of the former can be set on the main shaft 10, a common fixed member. Therefore, the number of pipes and connections is arranged on the main shaft 10 to that for the former which requires the most number of pipes in the suite. The same is true for the belt drum 2, the transfer ring 4 and the stitcher 5a(5b).

As an example suite of exchangeable members, there can be ready a group-type flat former and a lateral-bead-setting type former for the former 1, a belt drum for cut breaker and a belt drum for folded breaker for the belt drum 2, and two bead setters 3 one corresponding to the group-type flat former and one corresponding to the lateral-bead-setting type former, two transfer rings 4, one of standard-type and one with an opening and a triaxial-type stitcher and an exclusive stitcher for shoulder stitching as the stitcher 5a(5b). Further (as occasion demands), a stitcher for cut breaker and a stitcher for folded breaker are included. Servicers 17, 18 and 19 are selected respectively according to the material handling and automisation level at each factory. Servicers for full band, for edge band and for jointless band are also provided shown as a nylon band servicer 20.

Accordingly, all the desirable exchangeable members are assembled for an individual building purpose, whereby a necessary tyre building apparatus can be constituted.

The present invention is not limited to the above-mentioned embodiment, and modification of design is allowed without departing from the present invention. For example, the kinds of the former 1, the belt drum 2 and the like are not limited to the above-mentioned ones.

Since the present invention is constituted as above, the following effects result.

Needs, building method, and modification of kinds or grade of tyre at each factory can be accommodated easily and quickly. That is, desirable ones selected from the suite of the exchangeable members which are standardised for individual building purposes are assembled with the common fixed members, so that for example a changeover of building method, or a changeover from low grade tyre building to high grade tyre building is simplified. Consequently, product quality is unified, production efficiency is improved and cost is significantly reduced.

## Claims

1. A modular tyre building apparatus characterised by a plurality of fixed components and a plurality of exchangeable components selectively attached to said plurality of fixed components, said plurality of exchangeable components including a former (1), a belt drum (2), a bead setter (3), a transferring member (4), stitchers (5a,5b,6), and servicers (17,18,19,20), said plurality of fixed components including gear boxes (8,9), a main shaft (11) for said belt drum (2), a support base (15) for said transferring member (4), a support base (13) and a transfer mechanism (14) for said stitchers (5,6), a main shaft (10) for said former (1), a shaft (12) for a ply down finger, and a lower base (7) for supporting each of said plurality of fixed and exchangeable components.

2. A modular tyre building apparatus according to claim 1, characterised in that said exchangeable former (1) is selected from one of a group-type flat former and a lateral-bead-setting type former.

3. A modular tyre building apparatus according to claim 1 or claim 2, characterised in that said exchangeable belt drum (2) is selected from one of a belt drum for a cut breaker and a belt drum for a folder breaker.

4. A modular tyre building apparatus according to any of claims 1 to 3, characterised in that said transferring member (4) is selected from one of a standard-type and a transferring member with an opening formed therein.

5. A modular tyre building apparatus according to any of claims 1 to 4, characterised in that said stitchers (5a,5b,6) are selected from a triaxial-type stitcher, an exclusive stitcher for shoulder stitching, a stitcher for a cut breaker and a stitcher for a folded breaker.

6. A modular tyre building apparatus according to any of claims 1 to 5, characterised in that said servicers (17,18,19,20) are selected according to material handling and an automation level of said modular tyre building apparatus and for a full band, for an edge band and for a jointless band

7. A modular tyre building apparatus according to claim 2, characterised in that a number of piping for said main shaft (10) for said former (1) is set to that for a former requiring a largest number of piping.

8. A modular tyre building apparatus according to claim 1, characterised in that a number of piping for said main shaft (11) for said belt drum (2) is set to that for a belt drum requiring a largest number of piping.

## Patentansprüche

1. Eine modulare Reifenherstellvorrichtung, gekennzeichnet durch eine Vielzahl von festen Komponenten und eine Vielzahl von austauschbaren Komponenten, die selektiv an der Vielzahl der festen Komponenten angebracht sind, wobei die Vielzahl von austauschbaren Komponenten einen Former (1), eine Gürteltrommel (2), einen Wulstsetzer (3), ein Transferglied (4), Hefter (5a, 5b, 6) und Versorger (17, 18, 19, 20) umfaßt, wobei die Vielzahl von festen Komponenten Getriebe (8, 9), eine Hauptwelle (11) für die Gürteltrommel (2), eine Tragebasis (15) für das Transferglied (4), eine Tragebasis (13) und einen Transfermechanismus (14) für die Hefter (5, 6), eine Hauptwelle (10) für den Former (1), eine Welle (12) für einen Schichtablegefinger, und eine untere Basis (7) zum Tragen jedes der Vielzahl der festen und austauschbaren Komponenten umfaßt.

2. Eine modulare Reifenherstellvorrichtung nach Anspruch 1, dadurch gekennzeichnet, daß der austauschbare Former (1) ausgewählt ist aus einem eines Gruppen-Typus-Flach-Formers und eines Lateral-Wulst-Setz-Typus-Formers.

3. Eine modulare Reifenherstellvorrichtung nach Anspruch 1 oder Anspruch 2, dadurch gekennzeichnet, daß die austauschbare Gürteltrommel (2) aus einer einer Gürteltrommel für einen Schnittbreaker und einer Gürteltrommel für einen gefalteten Breaker ausgewählt ist.

4. Eine modulare Reifenherstellvorrichtung nach einem der Ansprüche 1 bis 3, dadurch gekennzeichnet, daß das Transferglied (4) aus einem eines Standardtypus und eines Transfergliedes mit einer Öffnung, die daran gebildet ist, ausgewählt ist.

5. Eine modulare Reifenherstellvorrichtung nach einem der Ansprüche 1 bis 4, dadurch gekennzeichnet, daß die Hefter (5a, 5b, 6) ausgewählt sind aus einem Triaxialtypus-Hefter, einem Exklusivhefter für Schulterheften, einem Hefter für einen Schnittbreaker und einem Hefter für einen gefalteten Breaker.

6. Eine modulare Reifenherstellvorrichtung nach einem der Ansprüche 1 bis 5, dadurch gekennzeichnet, daß die Versorger (17, 18, 19, 20) gemäß der Materialhandhabung und einem Automatisierungsniveau der modularen Reifenherstellvorrichtung und für ein Vollband, für ein Randband und für ein fugenloses Band ausgewählt sind.

7. Eine modulare Reifenherstellvorrichtung nach Anspruch 2, dadurch gekennzeichnet, daß eine Anzahl von Rohrleitungen für die Hauptwelle (10) für den Former (1) zu jener für einen Former gesetzt ist, der eine größte Anzahl von Rohrleitungen erfordert.

8. Eine modulare Reifenherstellvorrichtung nach Anspruch 1, dadurch gekennzeichnet, daß eine Anzahl von Rohrleitungen für die Hauptwelle (11) für die Gürteltrommel (2) zu jener für eine Gürteltrommel eingestellt ist, die eine größte Anzahl von Rohrleitungen erfordert.

## Revendications

1. Appareil modulaire de confection de pneumatiques, caractérisé par plusieurs éléments fixes et plusieurs éléments remplaçables fixés sélectivement aux éléments fixes, les éléments remplaçables comprenant un organe formateur (1), un tambour (2) de ceinture, un organe (3) de montage de talons, un organe (4) de transfert, des organes (5a, 5b, 6) de piqûre, et des organes (17, 18, 19, 20) de service, les éléments fixes comprenant des réducteurs (8, 9), un arbre fixe (11) pour le tambour (2) de ceinture, une base (15) de support de l'organe de transfert (4), une base (13) de support et un mécanisme de transfert (14) pour les organes de piqûre (5, 6), un arbre principal (10) pour l'organe formateur (1), un arbre (12) pour un doigt d'application de nappes, et une base inférieure (7) de support de chacun des éléments fixes et remplaçables.

2. Appareil modulaire de confection de pneumatiques selon la revendication 1, caractérisé en ce que l'organe formateur remplaçable (1) est choisi parmi un organe formateur plat de type regroupé et un organe formateur du type à réglage latéral de talons.

3. Appareil modulaire de confection de pneumatiques selon la revendication 1 ou 2, caractérisé en ce que le tambour remplaçable (2) de ceinture est sélectionné parmi un tambour de ceinture destiné à une nappe-sommet coupée et un tambour de ceinture destiné à une nappe-sommet pliée.

4. Appareil modulaire de confection de pneumatiques selon l'une quelconque des revendications 1 à 3, caractérisé en ce que l'organe de transfert (4) est choisi parmi un organe de type normal et un organe de transfert ayant une ouverture qui le traverse.

5. Appareil modulaire de confection de pneumatiques selon l'une quelconque des revendications 1 à 4, caractérisé en ce que les organes de piqûre (5a, 5b, 6) sont sélectionnés parmi un organe de piqûre de type triaxial, un organe de piqûre exclusive des épaulements, un organe de piqûre d'une nappe-sommet coupée et un organe de piqûre d'une nappe-sommet pliée.

6. Appareil modulaire de confection de pneumatiques selon l'une quelconque des revendications 1 à 5, caractérisé en ce que les organes de service (17, 18, 19, 20) sont sélectionnés en fonction de la manutention des matières et du niveau de l'automatisation de l'appareil modulaire de confection de pneumatiques, et en fonction d'un bandage complet, d'un bandage de bord et d'un bandage sans joint.

7. Appareil modulaire de confection de pneumatiques selon la revendication 2, caractérisé en ce que le nombre de tubes associés à l'arbre principal (10) de l'organe formateur (1) est réglé au nombre correspondant à un organe formateur nécessitant le plus grand nombre de tubes.

8. Appareil modulaire de confection de pneumatiques selon la revendication 1, caractérisé en ce que le nombre de tubes destinés à l'arbre principal (11) du tambour (2) de ceinture est réglé à celui du tambour de ceinture qui nécessite le plus grand nombre de tubes.
